# EUROPÄISCHE PATENTSCHRIFT

(11) **EP 4 025 809 B1**
(45) Veröffentlichungstag und Bekanntmachung des Hinweises auf die Patenterteilung: **24.05.2023**
(21) Anmeldenummer: 20764610.0
(22) Anmeldetag: 26.08.2020
(51) Int. Cl.: F16H 59/08, F16H 61/22, F16H 61/24

(54) **WÄHLHEBELANORDNUNG ZUM ANWÄHLEN UND SCHALTEN VON VERSCHIEDENEN FAHRMODI BEI EINEM FAHRZEUGGETRIEBE**
SELECTOR LEVER ASSEMBLY FOR SELECTING AND SWITCHING DIFFERENT DRIVING MODES IN A VEHICLE TRANSMISSION
DISPOSITIF DE LEVIER DE SÉLECTION PERMETTANT LA SÉLECTION ET LE CHANGEMENT ENTRE DIFFÉRENTS MODES DE CONDUITES POUR UNE BOÎTE DE VITESSES DE VÉHICULE

(30) Priorität: 06.09.2019 DE 102019213557
(43) Veröffentlichungstag der Anmeldung: 13.07.2022
(73) Patentinhaber: ZF Friedrichshafen AG, 88046 Friedrichshafen (DE)
(72) Erfinder: BODE, Carsten, 49356 Diepholz (DE); SZEKERES-KRISELIUS, Jan, 49448 Lemförde (DE)
(86) Internationale Anmeldenummer: PCT/EP2020/073870
(87) Internationale Veröffentlichungsnummer: WO 2021/043649

(56) Entgegenhaltungen:
- WO-A1-2018/217865
- DE-A1-102004 041 087
- DE-A1-102012 219 803
- US-B2- 9 810 314

## Beschreibung

Die vorliegende Erfindung betrifft eine Wählhebelanordnung zum Anwählen und Schalten von verschiedenen Fahrmodi bei einem Fahrzeuggetriebe gemäß der im Oberbegriff des Patentanspruches 1 näher definierten Art.

Eine Wählhebelanordnung der eingangs genannten Art ist beispielsweise aus der WO 2018/217 865 A1 bekannt.

Wählhebelanordnungen zum Anwählen und Schalten von Fahrmodi bei einem Fahrzeuggetriebe sind aus der Fahrzeugtechnik hinreichend bekannt. Üblicherweise umfasst die Wählhebelanordnung einen drehbar in einem Gehäuse gelagerten Drehschalter, dem die Fahrmodi über den Drehwinkelbereich zugeordnet sind, sodass die Fahrmodi durch das Verdrehen des Drehschalters anwählbar und somit schaltbar sind. Üblicherweise sind die verschiedenen Fahrmodi durch eine von dem Fahrer erfassbare Rastierung voneinander getrennt. Darüber hinaus ist vorgesehen, dass bestimmte Fahrmodi in bestimmten Fahrsituationen gesperrt sind, dies wird bei der Wählhebelanordnung durch entsprechende Sperrkontur ermöglicht.

Beispielsweise aus der Druckschrift US 9 810 314 B2 ist eine Schaltanordnung zum Wechseln von Gängen bei einem Fahrzeuggetriebe bekannt. Mit einem Drehschalter der Schaltanordnung können verschiedene Fahrmodi bei dem Fahrzeuggetriebe angewählt werden. Beispielsweise gibt es als Fahrmodus die Parkstellung, die Neutralstellung, die Rückwärtsgangstellung, den automatischen Fahrmodus und auch einen manuellen Fahrmodus sowie einen Sportfahrmodus. Diese verschiedenen Fahrmodi sind über den Drehschalter anwählbar.

Die bekannte Schaltanordnung umfasst hierzu einen Drehknopf zum Betätigen durch den Fahrer zum Einstellen der verschiedenen Fahrmodi. Der Drehknopf ist an einer Schaltwelle über eine Keilverzahnung drehfest angeordnet, sodass die Drehbewegung des Drehknopfes auf die Schaltwelle übertragen wird. Durch die Drehbewegung der Schaltwelle wird der entsprechende Fahrmodus von der in einem Gehäuse gelagerten Schaltwelle an ein Steuergerät des Fahrzeuggetriebes übertragen. Auf der Schaltwelle ist zudem eine Rastierscheibe über eine weitere Keilverzahnung drehfest verbunden. Der Außenumfang der Rastierscheibe weist eine Vielzahl von Zähnen auf, die von einem Rastierstift abgetastet werden, um bei der Drehbewegung entsprechende Rastierungen zu simulieren. Ferner ist an der Schaltwelle eine Sperrscheibe drehfest angeordnet. Die Sperrscheibe umfasst mehrere Sperrausnehmungen, in die entsprechende Sperrstifte eingreifen können, um die Drehbewegung der Schaltwelle in bestimmten Drehwinkeln sperren zu können. Die Sperrstifte sind in dem Gehäuse ortsfest angeordnet.

Der vorliegenden Erfindung liegt die Aufgabe zugrunde, eine Wählhebelanordnung der eingangs beschriebenen Gattung vorzuschlagen, welche möglichst konstruktiv einfach und kostengünstig aufgebaut ist.

Diese Aufgabe wird erfindungsgemäß durch die Merkmale des Patentanspruches 1 gelöst, wobei sich vorteilhafte und beanspruchte Weiterbildungen aus den Unteransprüchen und der Beschreibung sowie den Zeichnungen ergeben.

Somit wird zunächst eine Wählhebelanordnung zum Anwählen und Schalten von verschiedenen Fahrmodi, wie zum Beispiel einer Parkstellung, eines Rückwärtsgangmodus, eines Neutralmodus, eines Automatik-Fahrmodus, eines Sportfahrmodus oder eines Manuellfahrmodus bei einem Fahrzeuggetriebe vorgeschlagen. Die Wählhebelanordnung umfasst hierzu einen drehbar in einem Gehäuse gelagerten Drehschalter, wobei die Fahrmodi dem Drehwinkelbereich des Drehschalters zugeordnet sind und jeweils durch eine Rastierkontur voneinander durch einen Fahrer wahrnehmbar getrennt sind und wobei die Drehbewegung des Drehschalters über eine Sperrkontur sperrbar ist. Um eine besonders kostengünstige möglichst wenige Bauteile aufweisende und konstruktiv einfach aufgebaute Wählhebelanordnung vorzusehen, wird der Drehschalter einteilig mit der Sperrkontur und der Rastierkontur ausgeführt.

Demzufolge werden bei der vorgeschlagenen Wählhebelanordnung neben der Funktion des Anwählens und Schaltens der Fahrmodi zudem die Funktionen der Rastierung und der Sperrung in ein Bauteil integriert. Dadurch werden nicht nur Herstellungskosten eingespart, sondern auch der konstruktive Aufbau deutlich vereinfacht. Zudem ergibt sich der Vorteil, dass sich eine Optimierung der Haptik und auch des mechanischen Spiels bei der erfindungsgemäßen Wählhebelanordnung ergibt. Hierzu ist erfindungsgemäß auch vorgesehen, dass an die scheibenförmige Grundform an einer ersten Axialseite ein Knauf oder dergleichen zum Handhaben durch den Fahrer angeformt sein. Dieser steht dann quasi aus dem Gehäuse vor und kann durch den Fahrer zum Anwählen und Schalten der verschiedenen Fahrmodi besonders einfach betätigt werden. An der gegenüberliegenden zweiten Axialseite der scheibenförmigen Grundform ist ein Hülsenabschnitt oder dergleichen angeformt, mit dem der Drehschalter gehäuseseitig drehbar gelagert wird, sodass mit dem Drehschalter die erforderlichen Drehbewegungen ausgeführt werden können. Zur Integration der Rastierfunktion und der Sperrfunktion ist vorgesehen, dass an der dem Knauf abgewandten Axialseite eine eine bestimmte Rastierkontur aufweisende vorstehende Ringkontur angeformt ist. Diese wellenförmig axial vorstehende Ringkontur dient dann zum Realisieren der durch den Fahrer bei der Drehbewegung wahrnehmenden Rastierung, die die einzelnen Fahrmodi voneinander trennen. Es sind prinzipiell auch andere Konturen denkbar, die entsprechend einfach an die scheibenförmige Grundform der vorgeschlagenen Wählhebelanordnung angeformt werden können. Eine vorstehende Ringkontur bringt jedoch den Vorteil, dass die scheibenförmige Grundform entsprechend mechanisch stabilisiert wird.

Zum Realisieren der Funktion des Sperrens ist im Rahmen der Erfindung vorgesehen, dass eine entsprechende Sperrkontur an der dem Knauf abgewandten Axialseite des Drehschalters vorgesehen ist. Die Sperrkontur ist durch mehrere Anschlagbereiche oder dergleichen ausgeführt. Die Anschlagbereiche bilden quasi eine Sperre für gehäuseseitig angeordnete Sperrstifte, die beim Anliegen an diesen Anschlagbereichen die Drehbewegung des Drehschalters bei Bedarf sperren, um einen bestimmten Fahrmodus aus Sicherheitsgründen nicht verlassen zu können.

Die vorgesehenen Anschlagbereiche können durch beliebige geometrische Formen gebildet werden. Die vorgesehenen Anschlagbereiche als Sperrkontur können beispielsweise durch einander benachbarte Ausnehmungen oder dergleichen an der scheibenförmigen Grundform vorgesehen werden.

Um eine Steigerung der mechanischen Festigkeit an dem scheibenförmigen Grundkörper zu erreichen, ist erfindungsgemäß allerdings vorgesehen, dass die Anschlagbereiche radial außen mit der wellenförmigen Ringkontur der Rastierkontur und radial innen mit einem die scheibenförmige Grundkontur mechanisch stabilisierenden Ringbereich oder dergleichen verbunden sind. Auf diese Weise ergibt sich eine besonders stabile und zugleich kostengünstige Ausführung des Drehschalters bei der vorgeschlagenen Wählhebelanordnung.

Eine besonders bevorzugte Ausführung der vorgeschlagenen Wählhebelanordnung sieht vor, dass der Drehschalter als einteiliges Kunststoffspritzgussteil ausgeführt ist. Durch die Spritzgussherstellung ist es besonders einfach und kostengünstig die verschiedenen Funktionsflächen beziehungsweise die verschiedenen Funktionskonturen in das einteilige Kunststoffteil als Drehschalter zu integrieren. Es sind auch andere Materialien einsetzbar, die ein ähnlich optimiertes Herstellen des einteiligen Drehschalters der vorgeschlagenen Wählhebelanordnung ermöglichen.

Hinsichtlich der konstruktiven Ausführung kann im Rahmen einer Weiterbildung der Erfindung vorgesehen sein, dass der einteilige Drehschalter eine etwa scheibenförmige Grundform oder dergleichen aufweist, an der die verschiedenen Anformungen zum Realisieren der verschiedenen Funktionskonturen vorgesehen sind.

Im Rahmen der Erfindung kann bei der Sperrkontur die Anzahl der vorgesehenen Anschlagbereiche und der verwendeten Sperrstifte variieren, um die Drehung des Drehschalters in entsprechenden Drehwinkelbereichen zu sperren, sodass somit auch der zugeordnete Fahrmodus gesperrt ist.

Nachfolgend wird die vorliegende Erfindung anhand der Zeichnungen weiter erläutert.
Figur 1 eine dreidimensionale schematische Ansicht einer ersten Ausführungsvariante eines Drehschalters einer erfindungsgemäßen Wählhebelanordnung;
Figur 2 eine schematische Seitenansicht des Drehschalters der Wählhebelanordnung;
Figur 3 eine schematische dreidimensionale Ansicht des Drehschalters mit einem in Wirkverbindung mit einer Rastierkontur stehenden Rastierstift der Wählhebelanordnung;
Figur 4 eine schematische dreidimensionale Ansicht des Drehschalters mit dem gehäuseseitig angeordneten Rastierstift und mit gehäuseseitig angeordneten Sperrstiften der Wählhebelanordnung; und
Figur 5 eine schematische Teilansicht einer zweiten Ausführungsvariante des Drehschalters der erfindungsgemäßen Wählhebelanordnung.

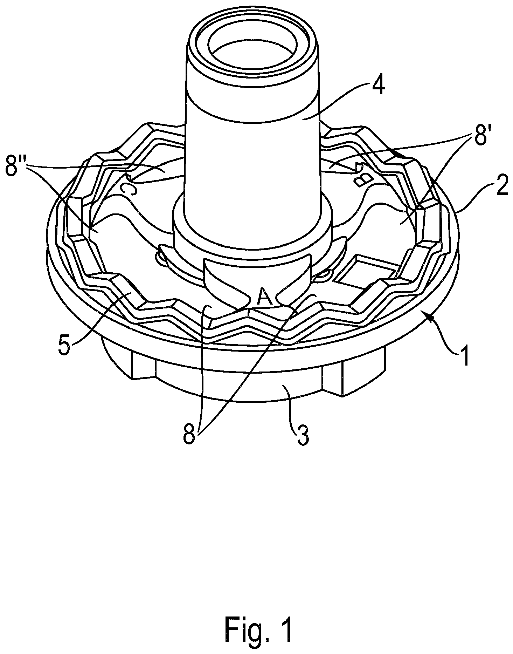

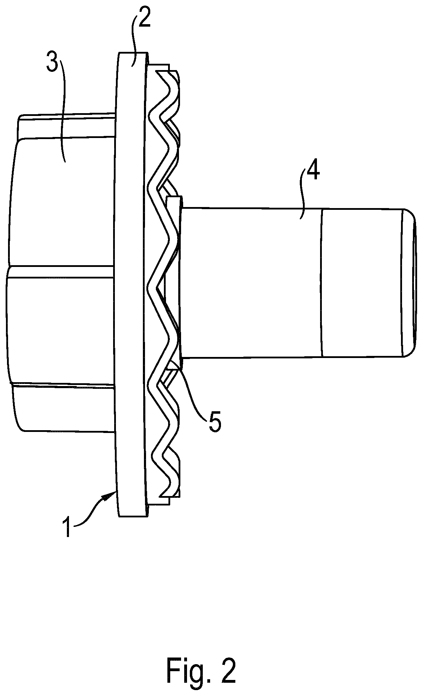

In den Figuren 1 bis 5 sind verschiedene Ansichten einer Wählhebelanordnung zum Anwählen und Schalten von verschiedenen Fahrmodi bei einem Fahrzeuggetriebe mit einem drehbar in einem nicht weiter dargestellten Gehäuse gelagerten Drehschalter 1 dargestellt. Die verschiedenen anzuwählenden Fahrmodi sind dem Drehwinkelbereich des Drehschalters 1 zugeordnet und jeweils durch eine Rastierung beziehungsweise Rastierkontur für den Fahrer wahrnehmbar voneinander getrennt. Die Drehbewegung des Drehschalters 1 ist über eine Sperrkontur sperrbar in vorbestimmten Fahrsituationen.

Um eine besonders konstruktiv einfach und kostengünstig hinsichtlich der Herstellungskosten ausgeführte Wählhebelanordnung zu realisieren, ist vorgesehen, dass der Drehschalter 1 einteilig mit der Sperrkontur und der Rastierkontur ausgeführt ist, wobei der Drehschalter 1 drehbar in dem Gehäuse gelagert ist.

Wie in den Figuren 1 bis 5 erkennbar ist, ist der Drehschalter 1 als einteiliges Kunststoffspritzgussteil ausgeführt. Der einteilige Drehschalter 1 weist im Wesentlichen eine etwa scheibenförmige Grundform 2 auf, welche insbesondere aus den Ansichten gemäß Figuren 1 bis 3 ersichtlich ist. An der ersten Axialseite des Drehschalters 1 ist ein Knauf 3 zum Handhaben durch den Fahrer axial vorstehend angeformt. An der gegenüberliegenden zweiten Axialseite der scheibenförmigen Grundform 2 des Drehschalters 1 ist ein Hülsenabschnitt 4 zur gehäuseseitigen drehbaren Lagerung des Drehschalters 1 axial vorstehend angeformt, um in einer entsprechenden Aufnahme des Gehäuses drehbar gelagert zu sein.

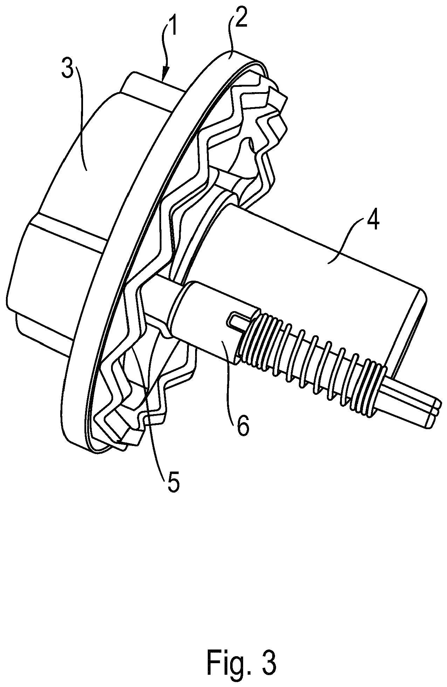

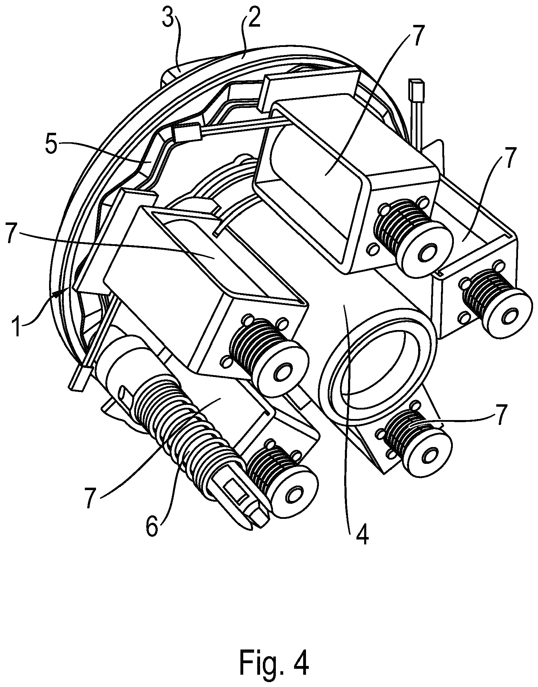

Insbesondere aus den Figuren 3 und 4 ist die angeformte Rastierkontur ersichtlich. Hierzu ist an der zweiten Axialseite der scheibenförmigen Grundform 2 des Drehschalters 1 als Rastierkontur eine axial vorstehende wellenförmige Ringkontur 5 angeformt. Die wellenförmige Ringkontur 5 wird von einem zugeordneten in beziehungsweise an dem Gehäuse befestigten Rastierstift 6 entsprechend abgetastet, um die verschiedenen Rastierungen haptisch für den Fahrer zu erzeugen. Der gehäusefest angeordnete und federbelastete Rastierstift 6 ist der wellenförmigen axialseitig vorstehenden Ringkontur 5 derart zugeordnet, dass der Rastierstift 6 in Wirkverbindung mit der wellenförmigen Ringkontur 5 steht und somit während der Drehbewegung des Drehschalters 1 die Rastierungen für den Fahrer wahrnehmbar erzeugt.

Als Sperrkontur sind an der zweiten Axialseite der scheibenförmigen Grundform 2 des Drehschalters 1 mehrere Anlage- beziehungsweise Anschlagbereiche A, B, C, D an der scheibenförmigen Grundform 2 vorgesehen. Die Anschlagbereiche A, B, C, D werden jeweils durch einander benachbarte Ausnehmungen 8, 8', 8", 8‴ gebildet. Die Ausnehmungen 8, 8', 8", 8‴ sind bei den dargestellten Ausführungsvarianten beispielhaft als Ringsegmente an der scheibenförmigen Grundform 2 vorgesehen, sodass zwischen benachbarten Ausnehmungen 8, 8', 8", 8‴ jeweils ein Anschlagbereich A, B, C, D gebildet wird.

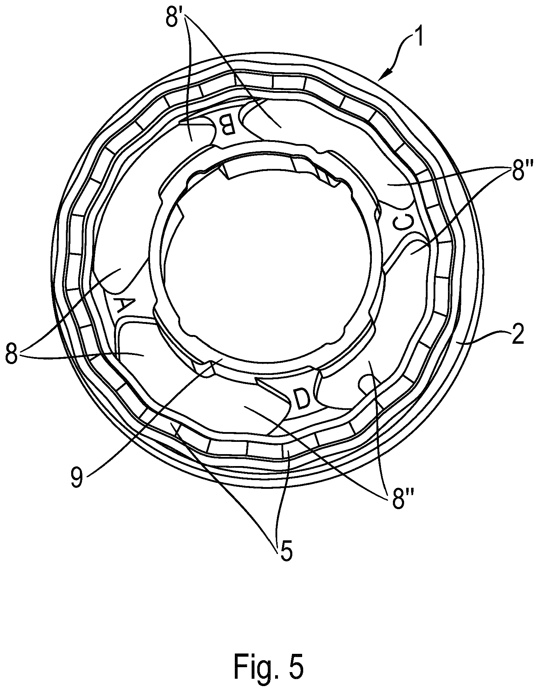

In den Figuren 1 bis 4 sind beispielhaft im Rahmen einer ersten Ausführungsvariante drei Anschlagbereiche A, B, C vorgesehen, während in Figur 5 beispielhaft eine zweite Ausführungsvariante dargestellt ist, bei der vier Anschlagbereiche A, B, C, D vorgesehen sind.

## Patentansprüche

1. Wählhebelanordnung zum Anwählen und Schalten von verschiedenen Fahrmodi bei einem Fahrzeuggetriebe, mit einem drehbar in einem Gehäuse gelagerten Drehschalter (1), wobei die Fahrmodi dem Drehwinkelbereich zugeordnet sind und jeweils durch eine Rastierkontur für einen Fahrer wahrnehmbar voneinander getrennt sind und wobei die Drehbewegung des Drehschalters (1) über eine Sperrkontur sperrbar ist, , wobei der Drehschalter (1) einteilig mit der Sperrkontur und der Rastierkontur ausgeführt ist, wobei der einteilige Drehschalter (1) eine scheibenförmige Grundform (2) aufweist, an deren erster Axialseite ein Knauf (3) zum Handhaben und an deren zweiter Axialseite ein Hülsenabschnitt (4) zur gehäuseseitigen drehbaren Lagerung jeweils axialseitig angeformt sind und die Rastierkontur an der zweiten Axialseite der scheibenförmigen Grundform (2) als wellenförmig axial vorstehende Ringkontur (5) ausgeführt ist, wobei die Sperrkontur durch mehrere Anschlagbereiche (A, B, C, D) an der scheibenförmigen Grundform (2) des Drehschalters (1) vorgesehen ist, wobei jeder Anschlagbereich (A, B, C, D) durch einander benachbarte Ausnehmungen (8, 8', 8", 8‴) an der scheibenförmigen Grundform (2) des Drehschalters (1) vorgesehen ist **dadurch gekennzeichnet, dass** jeder Anschlagbereich (A, B, C, D) radial außen mit der wellenförmigen Ringkontur (5) und radial innen mit einem mechanisch stabilisierenden Ringbereich (9) der scheibenförmigen Grundform (2) verbunden ist.

2. Wählhebelanordnung nach Anspruch 1, **dadurch gekennzeichnet, dass** der Drehschalter (1) als einteiliges Kunststoffspritzgussteil ausgeführt ist.

3. Wählhebelanordnung nach Anspruch 1 oder 2, **dadurch gekennzeichnet, dass** der Rastkontur ein gehäusefest angeordneter federbelasteter Rastierstift (6) zugeordnet ist, wobei der Rastierstift (6) mit der Rastkontur zum Erzeugen der vom Fahrer wahrnehmbaren Rastierungen während der Drehbewegung des Drehschalters (1) in Wirkverbindung steht.

4. Wählhebelanordnung nach einem der vorhergehenden Ansprüche , **dadurch gekennzeichnet, dass** der Sperrkontur mehrere gehäusefest angeordnete und axial bewegbare Sperrstifte (7) zugeordnet sind, die zum Sperren der Drehbewegung des Drehschalters (1) mit dem jeweiligen Anschlagbereich (A, B, C, D) der Sperrkontur in Wirkverbindung bringbar sind.

5. Wählhebelanordnung nach Anspruch 3, **dadurch gekennzeichnet, dass** der Drehschalter (1) als Sperrkontur drei Anschlagbereiche (A, B, C) aufweist, denen fünf Sperrstifte (7) zugeordnet sind.

6. Wählhebelanordnung nach Anspruch 3, **dadurch gekennzeichnet, dass** der Drehschalter (1) als Sperrkontur vier Anschlagbereiche (A, B, C, D) aufweist, denen vier Sperrstifte (7) zugeordnet sind.

## Claims

1. Selector lever assembly for selecting and switching different driving modes in a vehicle transmission, comprising a rotary switch (1) that is rotatably mounted in a housing, wherein the driving modes are assigned to the rotational angle range and are each separated from one another by a latching contour that is perceivable by a driver, and wherein the rotational movement of the rotary switch (1) can be blocked via a blocking contour, wherein the rotary switch (1) is formed in one piece with the blocking contour and the latching contour, wherein the one-piece rotary switch (1) has a disc-like body (2), on the first axial side of which there is moulded a knob (3) for manipulation, and on the second axial side of which there is moulded a sleeve section (4) for the rotatable mounting on the housing, in each case on the axial side, and the latching contour on the second axial side of the disc-shaped base (2) is designed as a wave-shaped annular contour (5) projecting axially, wherein the blocking contour is provided by a plurality of stop regions (A, B, C, D) on the disc-shaped body (2) of the rotary switch (1), wherein each stop region (A, B, C, D) is provided by mutually adjacent recesses (8, 8', 8", 8‴) on the disc-shaped body (2) of the rotary switch (1),
**characterized in that**
each stop region (A, B, C, D) is connected radially on the outside to the wave-shaped annular contour (5) and radially on the inside to a mechanically stabilizing annular region (9) of the disc-shaped body (2).

2. Selector lever assembly according to Claim 1, **characterized in that** the rotary switch (1) is formed as a one-piece plastic injection moulding.

3. Selector lever assembly according to Claim 1 or 2, **characterized in that** the latching contour is assigned a spring-loaded latching pin (6) fixed to the housing, wherein the latching pin (6) is operatively connected to the latching contour in order to produce the latching effect perceivable by the driver during the rotational movement of the rotary switch (1).

4. Selector lever assembly according to one of the preceding claims, **characterized in that** the blocking contour is assigned a plurality of axially movable blocking pins (7) which are fixed to the housing and which, to block the rotational movement of the rotary switch (1), can be brought into operative connection with the respective stop region (A, B, C, D) of the blocking contour.

5. Selector lever assembly according to Claim 3, **characterized in that** the rotary switch (1) has three stop regions (A, B, C) as a blocking contour, to which five blocking pins (7) are assigned.

6. Selector lever assembly according to Claim 3, **characterized in that** the rotary switch (1) has four stop regions (A, B, C, D) as a blocking contour, to which four blocking pins (7) are assigned.

## Revendications

1. Agencement de levier de sélection pour la sélection et le changement entre différents modes de conduite dans une boîte de vitesses de véhicule, avec un commutateur rotatif (1) monté de manière rotative dans un boîtier, les modes de conduite étant associés à la plage d'angles de rotation et étant séparés les uns des autres de manière perceptible pour un conducteur par un contour d'encliquetage, et le mouvement de rotation du commutateur rotatif (1) pouvant être bloqué par un contour de blocage, le commutateur rotatif (1) étant réalisé d'une seule pièce avec le contour de blocage et le contour d'encliquetage, le commutateur rotatif (1) d'une seule pièce présentant une forme de base en forme de disque (2), sur le premier côté axial duquel est formé un bouton (3) pour la manipulation et sur le deuxième côté axial duquel est formé une section de manchon (4) pour le montage rotatif côté boîtier, respectivement sur le côté axial, et le contour d'encliquetage étant réalisé sur le deuxième côté axial de la forme de base en forme de disque (2) sous la forme d'un contour annulaire (5) faisant saillie axialement sous forme ondulée, le contour de blocage étant prévu par plusieurs zones de butée (A, B, C, D) sur la forme de base en forme de disque (2) du commutateur rotatif (1), chaque zone de butée (A, B, C, D) étant prévue par des évidements (8, 8', 8", 8‴) voisins les uns des autres sur la forme de base en forme de disque (2) du commutateur rotatif (1), **caractérisé en ce que**
chaque zone de butée (A, B, C, D) est reliée radialement à l'extérieur au contour annulaire de forme ondulée (5) et radialement à l'intérieur à une zone annulaire de stabilisation mécanique (9) de la forme de base en forme de disque (2).

2. Agencement de levier de sélection selon la revendication 1, **caractérisé en ce que** le commutateur rotatif (1) est réalisé sous forme de pièce moulée par injection en matière plastique d'une seule pièce.

3. Agencement de levier de sélection selon la revendication 1 ou 2, **caractérisé en ce qu'**une goupille d'encliquetage (6) sollicitée par ressort, agencée de manière solidaire du boîtier, est associée au contour d'encliquetage, la goupille d'encliquetage (6) étant en liaison fonctionnelle avec le contour d'encliquetage pour générer les encliquetages perceptibles par le conducteur pendant le mouvement de rotation du commutateur rotatif (1) .

4. Agencement de levier de sélection selon l'une quelconque des revendications précédentes, **caractérisé en ce que** plusieurs goupilles de blocage (7) agencées de manière solidaire du boîtier et mobiles axialement sont associées au contour de blocage, lesquelles peuvent être mises en liaison fonctionnelle avec la zone de butée respective (A, B, C, D) du contour de blocage pour bloquer le mouvement de rotation du commutateur rotatif (1).

5. Agencement de levier de sélection selon la revendication 3, **caractérisé en ce que** le commutateur rotatif (1) présente en tant que contour de blocage trois zones de butée (A, B, C) auxquelles sont associées cinq goupilles de blocage (7).

6. Agencement de levier de sélection selon la revendication 3, **caractérisé en ce que** le commutateur rotatif (1) présente en tant que contour de blocage quatre zones de butée (A, B, C, D) auxquelles sont associées quatre goupilles de blocage (7).
